# EUROPEAN PATENT SPECIFICATION

(11) **EP 3 752 328 B1**
(45) Date of publication and mention of the grant of the patent: **03.04.2024**
(21) Application number: 19725081.4
(22) Date of filing: 14.05.2019
(51) Int. Cl.: B25J 11/00

(54) **A PORTIONING DEVICE AND A METHOD FOR PACKAGING OF FOOD PRODUCTS**
PORTIONIERVORRICHTUNG UND VERFAHREN ZUM VERPACKEN VON LEBENSMITTELPRODUKTEN
DISPOSITIF DE CRÉATION DE PORTIONS ET PROCÉDÉ D'EMBALLAGE DE PRODUITS ALIMENTAIRES

(30) Priority: 15.05.2018 SE 1850569
(43) Date of publication of application: 23.12.2020
(73) Proprietor: Robot Grader Aktiebolag, 431 90 Mölndal (SE)
(72) Inventor: STENBOM, Sverre, 421 67 Västra Frölunda (SE)
(74) Representative: Bjerkén Hynell KB
(86) International application number: PCT/EP2019/062381
(87) International publication number: WO 2019/219707

(56) References cited:
- EP-A1- 1 792 831
- EP-A1- 2 174 551
- FR-A1- 2 623 738

## Description

### TECHNICAL FIELD OF THE INVENTION

The present invention relates to a portioning device for packaging of food products, which portioning device comprises positioning device and gripping device. The invention also relates to a method for packaging of food products including optimized handling to achieve desired target weights.

### BACKGROUND ART

When packaging soft food products, such as fresh chicken, fish and other meat products, in portion carriers, it is important to obtain a well-packed portion carrier with a pleasant visual appearance. Packaging of such products may take place manually, i.e. operators/sorters standing along a conveyor package them manually. However, it is also important that the packaging process is fast and efficient. Therefore, automatized arrangements for packaging of soft food products have been developed, in which arrangements the food may be delivered to suitable portion carriers by device of packaging robots. Such packaging robots usually include a gripping device, which holds the food product during transportation to the portion carrier. When the gripping device is positioned above the portion carrier into which the food product shall be delivered, the gripping device is opened and the food product falls into the portion carrier.

EP 1,792,831 describes a method and a portioning device that enable controlled positioning of the food product in the portion carrier. This is accomplished by the food product being moved from the gripping device to a space defined by the gripping device. This is achieved by the gripping device being positioned such that at least parts of it is at a level below the top surface of a first food product which has already been placed at said portion carrier, whereby the space in the portion carrier may be efficiently utilized. The result is a closely packed portion carrier.

From WO 2005/106,405 it is further known a method and portioning device for packaging of food products of varying sizes, where at least two food products are to be packaged in the same packaging to obtain a target weight of the packaging. The method comprises the steps of making an estimate of the quantity of each food product, registering the location of each food product on an object conveyor, moving each food product to a collection area, determining by device of a computer program whether a food product is to be moved to a portion carrier, and, if such move is determined, also determining to which portion carrier the food product is to be moved in order to accomplish the target weight, and moving the food product to the selected portion carrier.

The methods and devices of EP 1,792,831 and WO 2005/106,405 have the drawback that although the food products are closely packed, and the target weight quite often may be obtained, they do not provide for altering the weight of the food products. This would lead to less difficulties, since e.g. when there is a stream of food products on a conveyor belt, which products are not easily combined to obtain a given target weight, it may result in inability to place a product into any available package. A separate cutting station is needed to deal with such problems, which adds complexity to the process and potentially gives increased costs.

As mentioned above, the use of cutting stations as such are known, e.g. as shown in EP 2174551, which relates to a cutting station for automatically separating non-consumable parts of fish.

### SUMMARY OF THE INVENTION

The object of the present invention is to provide a solution to the issues mentioned above by providing an improved portioning device for food products, as well as an improved method.

The object according to the invention is achieved by a gripping and portioning device according to claim 1. The object is also achieved by a method as defined in claim 10. Preferred embodiments of the invention are defined in the dependent claims.

The present invention enables downsizing of a food product by cutting, in the same station and step as gripping of the food product for portioning to a portion carrier. This is achieved by the portioning device, in addition to positioning and gripping device, comprising cutting device arranged in conjunction with said gripping device. Thus, food products can be downsized to better fulfil a target weight of the portion carriers. Further, it also provides the advantage that non-desired parts such as fat, veins, blood or bones can be removed. In case the removed part of the food product is a desired part in terms of food quality, it can be portioned to another portion carrier to fulfil the target weight of that portion carrier.

The cutting device is arranged in conjunction with the gripping device and it preferably cuts in a direction substantially transversal to said first and second jaws of the gripping device, which provides the advantage that a clean cut may be achieved.

The portioning device and the method of the invention may further include any or all aspects of the prior art documents EP 1,792,831 and WO 2005/106,405, which are hereby incorporated by reference. In particular, the positioning device may be arranged to position the gripping device in relation to a portion carrier such that at least parts of said gripping device are at a level below the top surface of at least one first food product which has already been placed at said portion carrier. Thereby, space is made for the food product beside a first food product in the portion carrier, whereby the space in the portion carrier is efficiently utilized and the result is a closely packed and attractive looking portion carrier essentially without any food product laying on top of the other.

Preferably, said gripping device further comprises ejector device, which ejector device are arranged in-between said first and second jaws. Such ejector device is movable between a first retracted holding position and a second ejected position. Furthermore, the jaws preferably form a hull like structure arranged to force the food product upwards in the gripping device to at least partly make contact with the ejector device, when closing around the food product. The articulately arranged jaws may also be articulately operable between at least three positions, one holding position and two open positions wherein the gripping device defines a larger space when positioned in a second open position, when a food product is to be enclosed in the gripping device when picked up from for example a conveyor belt, compared to the first open position, which defines an opening that is large enough for the food product to pass through. However, the opening is small enough to shape the food product to a desired shape, as it passes through the opening.

Other particular aspects of the prior art document EP 1,792,831 which are comprised herein, includes air nozzle device which provides an air stream directed towards the food product to be placed in said defined space at said portion carrier, in order to shape the food product to a desired shape when said food product is transferred from the gripping device to a portion carrier. Furthermore, the first and second jaws of the gripping device may further comprise foldable teeth in order to assist in the gripping of said food product.

### BRIEF DESCRIPTION OF THE DRAWINGS

The invention will be described in more detail in the following with reference to the accompanying schematic drawings, which for the purpose of exemplification illustrate embodiments of the invention.
Figs. 1a-1c are side views, in sequence showing a device and method according to the invention for cutting off a piece of a food product prior to the packaging thereof in a portion carrier;
Figs. 2a-2c are side views perpendicular to Figs. 1a-1c, in sequence showing a device and method according to the invention for cutting off a piece of a food product prior to the packaging thereof in a portion carrier;
Figs. 3a-3c are sequential side views showing a device and method according to a second embodiment of the invention;
Fig 4 is a side view showing a device and method according to a third embodiment of the invention;
Fig. 5 is a top view showing left and right chicken filets cut by the a device and method shown in Fig. 4;
Figs. 6a-6b are side views in sequence showing a device and method according to a fourth embodiment of the invention;
Figs 7 and 8 are side views of a modification according to the invention wherein the jaws are closed and a pivoting arrangement is used to perform the cutting action, wherein the start position is shown in Fig. 7 (and dotted in Fig. 8) and the end position is shown in Fig 8; and,
Figs 9 is a perspective view of the modification shown in Fig. 7 and 8, with closed jaws and a pivoting arrangement the start position.

### DETAILED DESCRIPTION OF PREFERRED EMBODIMENTS OF THE INVENTION

In the following, the present invention is described in detail in terms of being an improvement of the method and portioning device described in EP 1,792,831. It should however be understood that the invention is not limited thereto but can be used in any system for portioning food products to portion carriers.

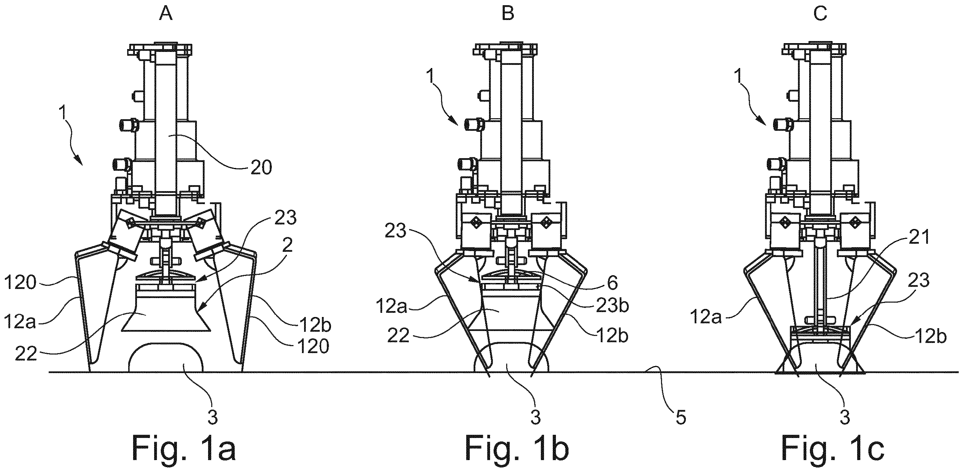

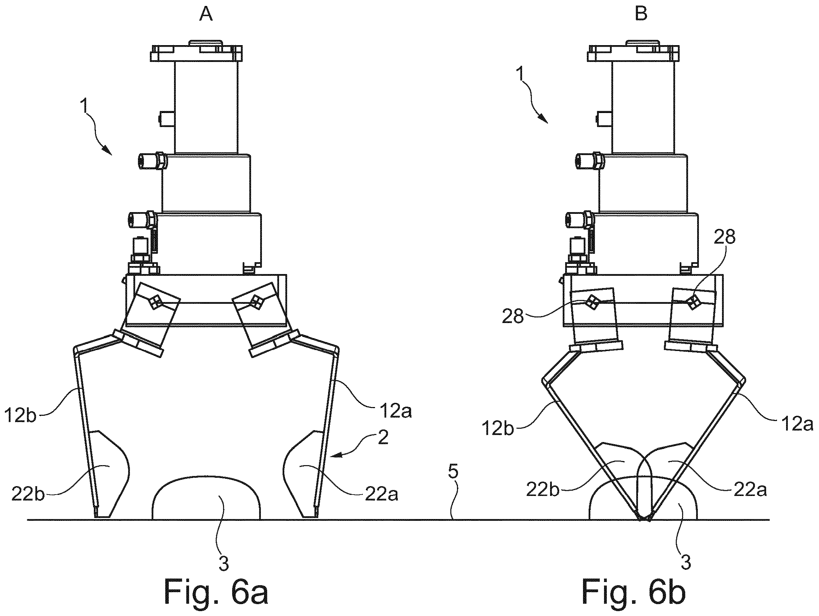

Based on a robot gripper 1 as described in EP 1,792,831, using, preferably blade shaped, jaws 12a, 12b, forming a tunnel shaped space between their facing inner gripping surfaces 123, wherein the jaws 12a, 12b are pivotally arranged around one joint or two parallel pivot axis 28 (see Fig 6b) extending in the same direction as the extension of the tunnel shaped space. A pusher device 6 may be arranged to safely hold an object 3. Along one of the side edges 120 of the jaws 12a, 12b there is a cutting device 2 mounted as shown in Figs. 1a-c, in accordance with one embodiment according to the invention. The cutting device includes a (preferably pneumatic) cylinder 20, a push rod 21, the end of which a holding device 23 fixes a knife blade 22.

The knife 22 is mounted at the side of the robot gripper 1, with the blade oriented transversely to the extension of the tunnel shaped space, so that the blade 22 can cut off a part 3A of a chicken filet 3 (or other, e.g. tenderloin, fish head, etc.) projecting to the side from the gripper opening, by device of a downward movement of the knife blade 22. The cut may be performed using the belt/table 5 as support. The knife blade 22 will pass along the edge 120 of the jaws 12a, 12b and create a scissor like movement between the knife blade 22 and the blades of the jaws 12a, 12 b ensuring that all fibers and/or sinew are completely cut. Alternatively, the cut is performed while the gripper 1 is moved upwards so that the knife can pass through the object 3 completely without touching the belt 5.

In Fig. 1a, the jaws 12a, 12b of the gripper 1 are in an open position and the knife 22 is in a retracted position as the push rod is retracted in the cylinder 20. In Fig. 1b, the jaws 12a, 12b have moved to a holding position, i.e. a position where they hold the chicken filet 3 that is lying on a conveyor belt or a table 5, while the knife 2 is still in a retracted position. In this position a part 3A of the chicken filet 3 may be arranged to protrude out from the tunnel shaped space delimited by the facing surfaces of the jaws 12a, 12b and one pair of opposing side edges 120 of said jaws 12a, 12b. In Fig. 1c, the push rod 21 is pushed out from the cylinder 20, moved, generally in parallel, along the side edges 120 and consequently the knife 2 is pushed through the chicken filet, to meet the belt or table 5, so that a piece 3A of the filet is cut off.

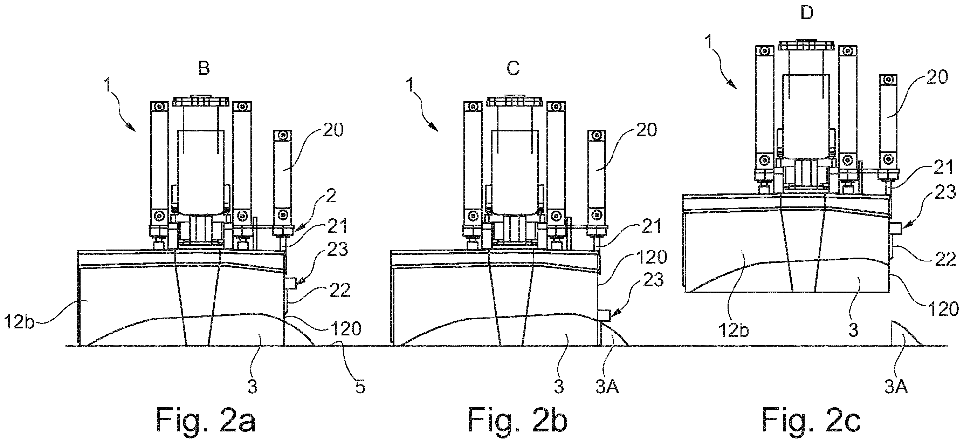

Figs. 2a-c are perpendicular to Figs. 1a-c. Figs. 2a and 2b correspond to Figs. 1b and 1c, respectively. Fig. 2c shows how the remaining, major part of the filet 3 is raised from the belt or table 5, by being held by the jaws 12a, 12b, while the cut off piece 3A of the filet, remains lying on the belt or table 5. The knife 2 has been retracted again. From the position shown in Fig. 2c, the filet 3 is portioned to a portion carrier (not shown) in a manner known per se, e.g. from EP 1,792,831.

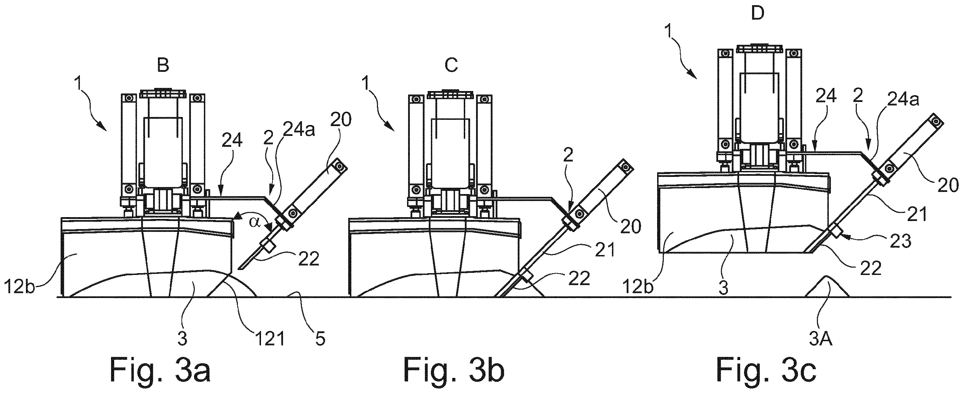

According to Figs. 3a-c there is shown a second embodiment of the invention in which the angle α of the cut is acute in relation to the belt or table 5, preferably by the cutting device 2 being attached to the gripping device by a holder 24 having a bent outer portion 24a where the knife 2 is attached. (For chicken filets, such a cut is today traditionally done in a separate, external cutting machine.) By attaching the knife 2 and thereby also the blade 22 at an angle α, preferably 30-60°, more preferred 40-50° and most preferred about 45°, a portion of the underside of the product is cut away, presenting as small an incision as possible. Thus, the product may then look whole and completely natural from above.

In this embodiment, the jaws 12a, 12b have beveled lower side edges 121, to provide for the angled movement of the knife. Although not shown, the holder 24 may alternatively be arranged to be adjustable, e.g. in the transition between the inner part of the holder 24 and the outer arm portion 24a, such that the desired angle α in relation to the belt or table 5 can be adjusted. Preferably this adjustment mechanism is a simple mechanical solution that manually can be quickly and easily adjusted, i.e. releasably fixated, to use the same setting during a process sequence, whereby cost and weight is kept low. However, it is evident that also remotely controlled adjustment mechanisms may be used, depending on needs.

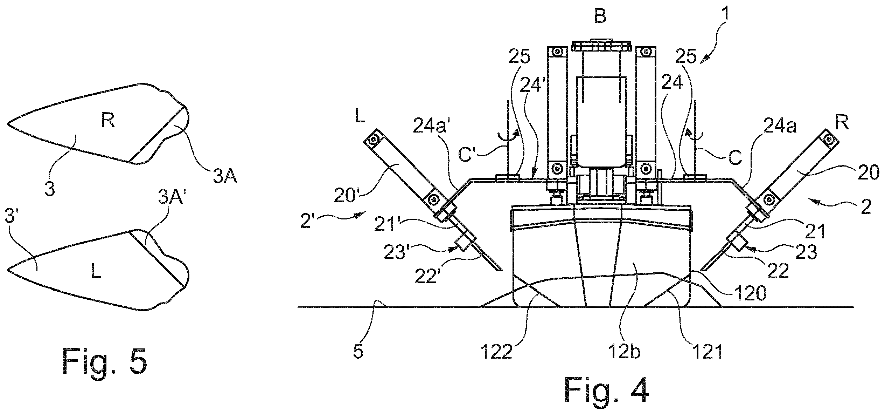

In a third embodiment of the improved gripper, as shown in Figs. 4 and 5, food products, of essentially mirrored conformation, such as right and left chicken breast filets 3, can be cut in different ways. Here, there is arranged an adjusting device 25 presenting a vertical axis of rotation C, around which the outer portion of the arm 24a and thereby the cutting device 2 may be rotated, preferably 30-60°, more preferred 40-50° and most preferred about 45° in both directions, to enable cutting away different parts (than that described above), e.g. the least appealing part 3A of the filets presented in Fig 5. Preferably, two cutting devices 2 (Right), 2' (Left) are arranged, one at each end of the beveled jaws 12a, 12b, each one in line with a respective beveled lower side edge 121, 122 of one of the jaws 12b. The robot may then be programmed to detect whether the filet 3 is of right R or left L conformation, possibly rotates the gripper 1 to grip the filet the correct way, then grips it and activates the cutting device 2 or 2' on that side of the gripper 1 that cuts off the desired piece 3A. Fig 5 shows a right filet R, which is to be cut with the cutting device marked 2. If thereafter next filet 3 to be gripped is identified as a left filet L, the robot gripper will rotate 180° to grab it and then apply the cutting device marked 2'. It is evident for the skilled person that the shown cutting lines in Fig 5 are as examples only, i.e. that the cutting line may be varied depending on desire/need in different applications.

Alternatively, (not shown), a line with more than one robot gripper 1 is equipped with two versions of the cutting device 2. The first robot gripper 1 may have a right-mounted cutting device 2 and it will cut and pack the right filets R only and the second robot gripper 1 may have a left-mounted cutting device 2' and it will cut and pack left filets L only.

Several knife arrangements can be contemplated, depending on the product to be cut. Figs. 6a-b show a knife 2 of scissor type, having two knife blades 22a, 22b attached to and oriented transversely to the inner surfaces of the jaws 12a, 12b, facing each other, so that the knife blades 22a, 22b will cut the part 3A of a chicken filet 3 (or similar) projecting to the side, by scissor action simultaneously with the moving of the jaws 12a, 12b into the holding position.

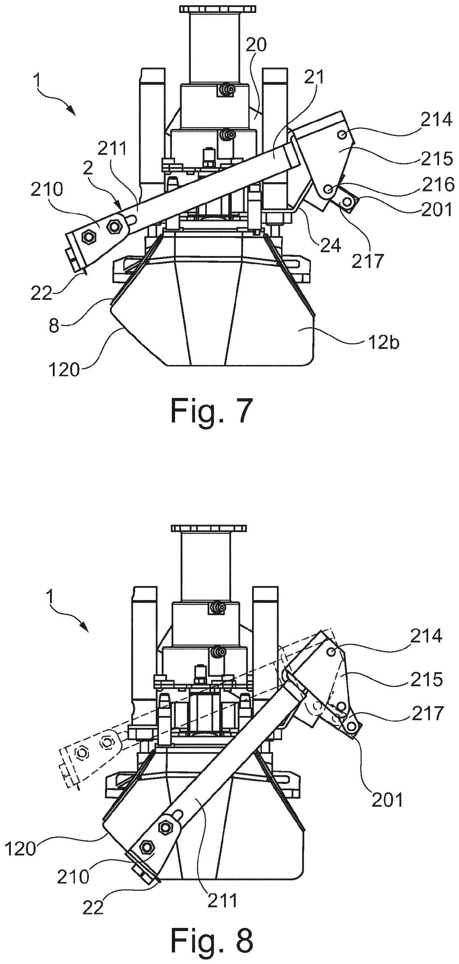

Figs. 7 and 8 show two perpendicular side views of an alternate cutting device 2, which is a preferred embodiment according to the invention. It is shown a gripping device 1 for cutting and packaging of food product 3 wherein the gripping device 1 comprises the first and second articulating jaws 12 a, 12 b. The positioning and gripping device 1 includes a cutting device 2 arranged to cut at one end of said second articulating jaws 12 A, 12 B. The cutting device 2 comprises the knife blade 22 arrange to cut along a curved plane including the side edges 120 of said jaws 12 a, 12, by means of a pivoting member 21. The knife 22 is mounted in a knife holder 210, that preferably is adjustably attached to the pivoting member 21. Preferably the pivoting member 21 comprises two parallel pivoting arms 211, 212. Each pivoting arm 211, 212 is attached with the distal/front end to one side each of the knife holder 210. At the other end the pivoting arms 211, 212 are attached to a rear part 213. The pivotal movement of the pivoting member 21 is powered by a driving device 20, that preferably is in the form of a hydraulic cylinder, and/or a pneumatic cylinder, but may also be in the form of an electric linear activator. As shown in figure 8 the knife blade 22 will pivot and follow the curved side edges 120 of the two jaws 12 a, 12 a.

According to the shown embodiment the pivoting movement of the arms 211, 212 is achieved by having rear part 213 fixedly attached to a bracket 215 and having the bracket 215 pivotally attached to the holder 25 about a pivot axis 214. The driving device 20 includes a pushing rod 201. At the end of the pushing rod 201 a pivotal link arm 217 is attached that connects the pushing rod 201 with the bracket 215. Hence, when the pushing rod 201 is activated it will pull the pivotal link arm 217, that in turn will pull the bracket 215, such that a pivoting action of the arms 211, 212 will be achieved, i.e. to move downwards and follow along the curved side edges 120 of the two jaws 12 a, 12 a.

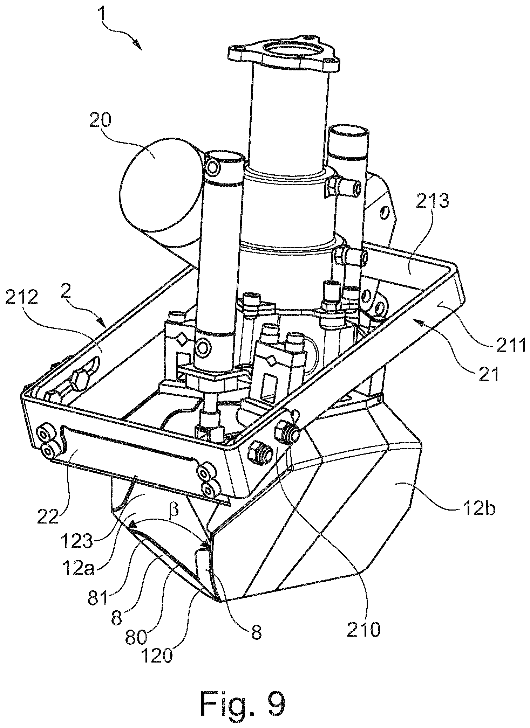

In Fig. 9 it is shown that along the side edges 120 there are arranged inwardly directed edge cutters 8. According to the preferred embodiment the edge cutters 8 are directed substantially perpendicularly in relation to the plane of extension of the sheet like (preferably metal) body of each jaw 12a, 12b, i.e. in relation to the inner surface 123 of each jaw 12a, 12b. Thanks to having the planes of extension of the sheet like body of the jaws 12a, 12b forming an angle β in the closed/gripping position, that is less than 180 ° the two edge cutters 8 will form a narrowing gap in between them, i.e. a converging gap in relation to the direction of the cutting movement of the cutting knife 22, that will assist in ease of performing a precise cut of an object along the side edges 120. Further the edge cutters 8 will also assist in maintaining the object at the desired position during the cutting operation. Preferably the angle β is in the range of 70° - 110°. The edge cutters 8 comprise an inner part 80 that is fixedly attached to (or integrated with) the sheet like body of each jaw 12a, 12b and an outer part 81 forming the cutting-edge. The height of the edge cutters 8 may vary depending on the kind of object 3, but may in may application fulfil the desired function even if it is relatively small, e.g. about or less than 10 mm.

As mentioned above, the edge cutters 8 will assist in cutting off a piece 3A of an object 3, in a precise manner, providing precision in downsizing of a food product 3. Accordingly, an object 3 will be cut from above by the cutting edge of the cutting knife 22 and partly also from two other sides from below by means of the edge cutters 8, thereby creating a totally clean cut of the object 3.

An advantage of the invention is that it enables the weight of the cut-off object part 3a to be calculated based on length measurement, because the cut can be done with great precision. Since the processing equipment, in accordance with the prior art, knows the weight (weighing) as well as the shape (ocular scanning) of the object 3, the exact fit of the cut can accurately be used to precisely calculate the weight of the cut product 3 (respectively, the cut off piece 3A) at each robot itself, i.e. thanks to providing precise downsizing in combination with the product 3 being gripped and positioned. Hence, since the processing equipment can control the gripper device 1 very exactly (e.g. 0,1 millimeter precision), the downsizing may be very precise, due to the fact that the exact weight, exact distribution of the weight along the product and the exact form of the cut (along the edge 120) are known.

Thus, thanks to the invention, the decision of the weight can be taken in connection with the robot gripping the object 3 and cutting/downsizing may then be performed timely very close to positioning of the cut object 3 in a portion carrier, e.g. in connection with moving the object to the portion carrier. Such a processing cannot be done when cutting is done in a separate station before the picking/positioning robot. Thanks to the invention, therefore, a considerably greater flexibility can be obtained because weight and positioning decisions can be taken directly in one and the same step (without the risk of creating undesired queue / waiting time), and regardless of where in the chain, when a plurality of robots are utilized. One can therefore wait to choose the weight when the object 3, e.g. fillet, arrives at each robot, respectively, to determine which weight optimally optimizes and which portion carrier should be prioritized to be completed. It is evident for the skilled person that the above advantages may be obtained irrespective how the jaws are moved from an open to a closed position, i.e. irrespective if moved pivotally or linearly.

The cut off piece 3A of the food product may remain on a conveyor belt and can be picked up by the robot at the next cycle, to be packaged in a different packaging to achieve the target weight thereof. For example, if the target weight of the packaging is 120 g and the incoming food products have an average weight of 80 g, then 40 g on average can be cut off and combined with a whole filet to fulfil a target weight of 120 g. Another option is for the cut off part to be transferred to another food handling step such as shredding or similar.

Yet another option may be that the robot lifts the whole filet from the belt and moves to one of several possible positions, to cut the excess weight. Depending on the weight or other sorting criteria such as the presence of fat, blood or bones, it can cut non-identical portions in the different positions, to then be used for various further processes.

The invention is not limited to the shown embodiments but may be varied within the scope of the claims. For instance, it is evident that the object of the invention may basically be fulfilled by using merely one edge cutter 8 at one of the jaws 12a, 12b, and further that it may suffice if the edge cutter 8 extends along a part of the side edge 120. Further it is evident that the basic principles of the invention may be fulfilled in connection with jaws of various shapes and numbers, e.g. it is no prerequisite that the jaws have sheet like bodies, since it is basically an interaction between the inner surfaces of the jaws 12a, 12b, the edge cutter/s 8 and the cutting knife 22. As is shown the cut preferably is performed in a direction that is substantially transversal the jaws 12a, 12b, which must be construed in a broad manner. Moreover, it is foreseen the basic principles of the invention may be fulfilled in connection with jaws that move linearly, i.e. that move along a linear path between the open and closed position, respectively.

## Claims

1. A portioning robot for food products (3), arranged to grip and place a food product in a portion carrier in the same station and step, comprising a gripping and positioning device (1), which gripping and positioning device (1) includes two gripping members (12a, 12b) arranged to grip a food product (3) laying on a belt or table (5), wherein at least one of said gripping members (12a, 12b) is movable between at least two relative positions, one holding position and one open position, wherein inner surfaces (123) of the jaws (12a, 12b) form an angle (β) in the closed/gripping position, that is less than 180 ° forming a narrowing gap, in between said inner surfaces (123) of the jaws (12a, 12b), further comprising a processing equipment including a weighing device and an ocular scanning device wherein said gripping and portioning device (1) comprises a movable, downsizing cutting device (2) arranged at least on one side (120) of said gripping members (12a, 12b), said downsizing cutting device (2) comprising a knife blade (22) arranged to cut along the side edges (120) or corner edges (121, 122) of both of said gripping members (12a, 12b), **characterised in that** along at least a part of at least one edge (120) is arranged an edge cutter (8) having a cutting edge (81) enabling downsizing of the food product (3) by means of said processing equipment arranged to control exact gripping of the product (3) at a position that based on length measurement provides a precisely calculated weight of the cut product, arranged to achieve a downsizing cut of a food product (3), to better fulfil a target weight of a portion carrier, said inner surfaces (123) of the jaws (12a, 12b) providing a converging gap in relation to the direction of the cutting movement of the cutting knife (22).

2. A portioning device according to claim 1, **characterized in that** at least one of said gripping members (12a, 12b) is an articulately arranged jaw/s (12a, 12b), wherein preferably said gripping members (12a, 12b) include first and second articulating jaws (12a, 12b).

3. A portioning device according to claim 1 or 2, **characterized in that** said cutting device (2) comprises a knife blade (22) arranged to cut along a plane that is substantially parallel to a side edge (120) or corner edge (121, 122) of at least one of said jaws (12a, 12b).

4. A portioning device according to any of the preceding claims, **characterized in that** said cutting device (2) is arranged to be moved by means of a pivoting member (21) along a curved side edge (120) or corner edge (121, 122) of said jaws (12a, 12b).

5. A portioning device according to claim 4, **characterized in that** said pivoting member (21) comprises at least on pivoting arm (211, 212) having a knife holder (210), preferably adjustably, attached at a distal end of the pivoting arm (211, 212).

6. A portioning device according to any of claims 1-5, **characterized in** said edge cutter (8) is directed substantially perpendicularly in relation to the inner surface (123) of the body of said jaw (12a, 12b).

7. A portioning device according to claim 6, **characterized in that** to the length of the edge cutter (8) along the edge (120) is at least 20 mm, more preferred 40 to 100 mm.

8. A portioning device according to claim 6 or 7, **characterized in that** the inner surfaces (123) of the bodies of said jaw (12a, 12b) in the closed position are arranged to form an angle (β), that is less than 180 °, preferably in the range of 70° - 110°.

9. A portioning device according to claim 6, 7 or 8, **characterized in that** the edge cutters (8) comprise an inner part 80 that is fixedly attached to or integrated with the body of the jaw (12a, 12b).

10. A method for packaging of food products (3) comprising:
i. forwarding the food product (3) to a robot and gripping the food product (3) by a robot gripping device (1) including two gripping members (12a, 12b) arranged to hold said food product (3) in a holding position;
ii. raising said food product (3) to be moved to a portion carrier by said gripping device (1);
iii. moving said food product (3) to the selected portion carrier and
iv. releasing said food product (3) to the portion carrier, wherein in conjunction with step "I" or step "ii", a piece (3A) of said food product (3) is cut off by a cutting device (2) arranged at a first and/or second end/s (120) of said gripping members (12a, 12b) , wherein said cutting device (2) interacts with at least one edge cutter (8) arranged along at least a part of said first and/or second ends (120), and wherein at each robot, in connection with a food product (3) arriving, determining an optimal downsized weight of the food product (3) for a chosen portion carrier, calculating the position of the downsizing cut of the object to achieve said downsized weight and controlling the robot by gripping the food product (3) at a position based on a length measurement which provides a precisely calculated weight of the cut product that will achieve said determined downsizing cut of said food product (3), to better fulfil a target weight of said portion carrier.

11. A method according to claim 10, **characterized by** providing at least one of said gripping members (12a, 12b) as an articulately arranged jaw/s (12a, 12b).

12. A method according to claim 11, **characterized by** arranging said gripping members (12a, 12b) with first and second articulately arranged jaws (12a, 12b)

13. A method according to any of claims 10-12, **characterized by** providing said cutting device (2) with at least one knife blade (22).

14. A method according to any of claims 10-13, **characterized by** arranging the inner surfaces (123) of the bodies of said jaw (12a, 12b) in the closed position to form an angle (β), that is less than 180°.

15. A method according to claim 14, **characterized by** arranging said angle (β) to be in the range of 70° - 110°.

## Patentansprüche

1. Portionierroboter für Nahrungsmittelprodukte (3), der dafür ausgelegt ist, ein Nahrungsmittelprodukt in derselben Station und demselben Schritt zu greifen und in einem Portionsträger zu platzieren, umfassend eine Greif- und Positioniervorrichtung (1), wobei die Greif- und Positioniervorrichtung (1) zwei Greifelemente (12a, 12b) beinhaltet, die dafür ausgelegt sind, ein Nahrungsmittelprodukt (3) zu greifen, das auf einem Band oder einem Tisch (5) liegt, wobei mindestens eines der Greifelemente (12a, 12b) zwischen mindestens zwei Relativstellungen, einer Haltestellung und einer Offenstellung, bewegbar ist, wobei Innenflächen (123) der Klemmbacken (12a, 12b) in der Schließ-/Greifstellung einen Winkel (β) bilden, der weniger als 180° beträgt, wodurch zwischen den Innenflächen (123) der Klemmbacken (12a, 12b) ein sich verengender Spalt gebildet wird, ferner umfassend ein Verarbeitungsgerät, das eine Wiegevorrichtung und eine Okularabtastvorrichtung beinhaltet, wobei die Greif- und Portioniervorrichtung (1) eine bewegliche, verkleinernde Schneidvorrichtung (2) umfasst, die zumindest auf einer Seite (120) der Greifelemente (12a, 12b) angeordnet ist, wobei die verkleinernde Schneidvorrichtung (2) eine Messerklinge (22) umfasst, die dafür ausgelegt ist, entlang der Seitenkanten (120) oder Eckkanten (121, 122) der beiden Greifelemente (12a, 12b) zu schneiden, **dadurch gekennzeichnet, dass** entlang mindestens eines Teils von mindestens einer Kante (120) ein Kantenschneider (8) angeordnet ist, der eine Schneidkante (81), die ein Verkleinern des Nahrungsmittelprodukts (3) mittels des Verarbeitungsgeräts ermöglicht, das dafür ausgelegt ist, ein exaktes Greifen des Produkts (3) an einer Position zu steuern, die, basierend auf einer Längenmessung, ein genau berechnetes Gewicht des geschnittenen Produkts bereitstellt, aufweist, der dafür ausgelegt ist, einen Verkleinerungsschnitt eines Nahrungsmittelprodukts (3) zu erreichen, um ein Zielgewicht eines Portionsträgers besser zu erfüllen, wobei die Innenflächen (123) der Klemmbacken (12a, 12b) einen in Bezug auf die Richtung der Schneidbewegung des Schneidmessers (22) zusammenlaufenden Spalt bereitstellen.

2. Portioniervorrichtung nach Anspruch 1, **dadurch gekennzeichnet, dass** es sich bei mindestens einem der Greifelemente (12a, 12b) um (eine) gelenkig angeordnete Klemmbacke(n) (12a, 12b) handelt, wobei die Greifelemente (12a, 12b) vorzugsweise eine erste und eine zweite Klemmbacke (12a, 12b) beinhalten.

3. Portioniervorrichtung nach Anspruch 1 oder 2, **dadurch gekennzeichnet, dass** die Schneidvorrichtung (2) eine Messerklinge (22) umfasst, die dafür ausgelegt ist, entlang einer Ebene zu schneiden, die im Wesentlichen parallel zu einer Seitenkante (120) oder einer Eckkante (121, 122) von mindestens einer der Klemmbacken (12a, 12b) ist.

4. Portioniervorrichtung nach einem der vorhergehenden Ansprüche, **dadurch gekennzeichnet, dass** die Schneidvorrichtung (2) dafür ausgelegt ist, mittels eines Schwenkelements (21) entlang einer gekrümmten Seitenkante (120) oder Eckkante (121, 122) der Klemmbacken (12a, 12b) bewegt zu werden.

5. Portioniervorrichtung nach Anspruch *4,*, **dadurch gekennzeichnet, dass** das Schwenkelement (21) mindestens einen Schwenkarm (211, 212) umfasst, der einen Messerhalter (210) aufweist, der, vorzugsweise verstellbar, an einem distalen Ende des Schwenkarms (211, 212) angebracht ist.

6. Portioniervorrichtung nach einem der Ansprüche 1-5, **dadurch gekennzeichnet, dass** der Kantenschneider (8) in Bezug auf die Innenfläche (123) des Körpers der Klemmbacke (12a, 12b) im Wesentlichen senkrecht ausgerichtet ist.

7. Portioniervorrichtung nach Anspruch 6, **dadurch gekennzeichnet, dass** die Länge des Kantenschneiders (8) entlang der Kante (120) mindestens 20 mm, stärker bevorzugt 40 bis 100 mm, beträgt.

8. Portioniervorrichtung nach Anspruch 6 oder 7, **dadurch gekennzeichnet, dass** die Innenflächen (123) der Körper der Klemmbacke (12a, 12b) in der Schließstellung so ausgelegt sind, dass sie einen Winkel (β) bilden, der kleiner als 180°, vorzugsweise im Bereich 70°- 110°, ist.

9. Portioniervorrichtung nach Anspruch 6, 7 oder 8, **dadurch gekennzeichnet, dass** die Kantenschneider (8) einen inneren Teil 80 umfassen, der fest mit dem Körper der Klemmbacke (12a, 12b) verbunden oder in diesem integriert ist.

10. Verfahren zum Verpacken von Nahrungsmittelprodukten (3), umfassend:
i. Befördern des Nahrungsmittelprodukts (3) zu einem Roboter und Greifen des Nahrungsmittelprodukts (3) durch eine Robotergreifvorrichtung (1), die zwei Greifelemente (12a, 12b) beinhaltet, die dafür ausgelegt sind, das Nahrungsmittelprodukt (3) in einer Haltestellung zu halten;
ii. Anheben des Nahrungsmittelprodukts (3), das zu einem Portionsträger bewegt werden soll, durch die Greifvorrichtung (1) ;
iii. Bewegen des Nahrungsmittelprodukts (3) zu dem ausgewählten Portionsträger und
iv. Ausgeben des Nahrungsmittelprodukts (3) an den Portionsträger, wobei in Verbindung mit Schritt "i" oder Schritt "ii" ein Stück (3A) des Nahrungsmittelprodukts (3) durch eine Schneidvorrichtung (2), die an einem ersten und/oder zweiten Ende (120) der Greifelemente (12a, 12b) angeordnet ist, abgeschnitten wird, wobei die Schneidvorrichtung (2) mit mindestens einem Kantenschneider (8) zusammenwirkt, der entlang zumindest eines Teils des ersten und/oder des zweiten Endes (120) angeordnet ist, und, an jedem Roboter, in Verbindung mit einem ankommenden Nahrungsmittelprodukt (3), Bestimmen eines optimalen Verkleinerungsgewichts des Nahrungsmittelprodukts (3) für einen ausgewählten Portionsträger, Berechnen der Position des verkleinernden Schnitts des Objekts, um das Verkleinerungsgewicht zu erreichen, und Steuern des Roboters durch Greifen des Nahrungsmittelprodukts (3) an einer Position basierend auf einer Längenmessung, die ein genau berechnetes Gewicht des geschnittenen Produkts liefert, das den bestimmten verkleinernden Schnitt des Nahrungsmittelprodukts (3) erreichen wird, um ein Zielgewicht des Portionsträgers besser zu erfüllen.

11. Verfahren nach Anspruch 10, **gekennzeichnet durch** ein Bereitstellen mindestens eines der Greifelemente (12a, 12b) als gelenkig angeordnete Klemmbacke(n) (12a, 12b).

12. Verfahren nach Anspruch *11,*, **gekennzeichnet durch** Anordnen der Greifelemente (12a, 12b) mit einer ersten und einer zweiten gelenkig angeordneten Klemmbacke (12a, 12b).

13. Verfahren nach einem der Ansprüche 10-12, **gekennzeichnet durch** Bereitstellen der Schneidvorrichtung (2) mit mindestens einer Messerklinge (22).

14. Verfahren nach einem der Ansprüche 10-13, **gekennzeichnet durch** Anordnen der Innenflächen (123) der Körper der Klemmbacke (12a, 12b) in der Schließstellung so, dass sie einen Winkel (β) bilden, der kleiner ist als 180°.

15. Verfahren nach Anspruch 14, **gekennzeichnet durch** Anordnen des Winkels (β) so, dass er im Bereich 70°-110° liegt.

## Revendications

1. Robot de portionnement pour produits alimentaires (3), agencé pour saisir et placer un produit alimentaire dans un support de portion dans les mêmes station et étape, comprenant un dispositif de saisie et de positionnement (1), lequel dispositif de saisie et de positionnement (1) comporte deux éléments de saisie (12a, 12b) agencés pour saisir un produit alimentaire (3) posé sur une courroie ou une table (5), dans lequel au moins un desdits éléments de saisie (12a, 12b) est mobile entre au moins deux positions relatives, une position de maintien et une position ouverte, dans lequel les surfaces internes (123) des mâchoires (12a, 12b) forment un angle (β) dans la position fermée/de saisie, qui est inférieure à 180° formant un espace de rétrécissement, entre lesdites surfaces internes (123) des mâchoires (12a, 12b), comprenant en outre un équipement de traitement comportant un dispositif de pesage et un dispositif de balayage oculaire dans lequel ledit dispositif de saisie et de portionnement (1) comprend un dispositif de coupe de réduction de taille (2) mobile agencé au moins sur un côté (120) desdits éléments de saisie (12a, 12b), ledit dispositif de coupe de réduction de taille (2) comprenant une lame de couteau (22) agencée pour couper le long des arêtes latérales (120) ou des arêtes de coin (121, 122) des deux parmi lesdits éléments de saisie (12a, 12b), **caractérisé en ce que** le long d'au moins une partie d'au moins une arête (120) est agencée un coupe-arête (8) ayant une arête coupante (81) permettant de réduire la taille du produit alimentaire (3) au moyen dudit équipement de traitement agencé pour commander la saisie exacte du produit (3) à une position qui, basée sur la mesure de longueur, fournit un poids calculé précisément du produit coupé, agencé pour réaliser une coupe de réduction de taille d'un produit alimentaire (3), afin de mieux satisfaire un poids cible d'un support de portion, lesdites surfaces internes (123) des mâchoires (12a, 12b) fournissant un espace convergent par rapport à la direction du mouvement de coupe du couteau (22) de coupe.

2. Dispositif de portionnement selon la revendication 1, **caractérisé en ce qu'**au moins un desdits éléments de saisie (12a, 12b) est une mâchoire/s (12a, 12b) agencée/s de manière articulée, dans lequel de préférence lesdits éléments de saisie (12a, 12b) comportent des première et deuxième mâchoires d'articulation (12a, 12b) .

3. Dispositif de portionnement selon la revendication 1 ou 2, **caractérisé en ce que** ledit dispositif de coupe (2) comprend une lame de couteau (22) agencée pour couper le long d'un plan qui est sensiblement parallèle à une arête latérale (120) ou une arête de coin (121, 122) d'au moins une desdites mâchoires (12a, 12b).

4. Dispositif de portionnement selon l'une quelconque des revendications précédentes, **caractérisé en ce que** ledit dispositif de coupe (2) est agencé pour être déplacé au moyen d'un élément pivotant (21) le long d'une arête latérale incurvée (120) ou d'une arête de coin (121, 122) desdites mâchoires (12a, 12b).

5. Dispositif de portionnement selon la revendication 4, **caractérisé en ce que** ledit élément pivotant (21) comprend au moins un bras pivotant (211, 212) ayant un porte-couteau (210) fixé de préférence de manière réglable à une extrémité distale du bras pivotant (211, 212).

6. Dispositif de portionnement selon l'une quelconque des revendications 1 à 5, **caractérisé en ce que** ledit coupe-arête (8) est dirigé sensiblement perpendiculairement par rapport à la surface interne (123) du corps de ladite mâchoire (12a, 12b).

7. Dispositif de portionnement selon la revendication 6, **caractérisé en ce que** la longueur du coupe-arête (8) le long de l'arête (120) est d'au moins 20 mm, de préférence de 40 à 100 mm.

8. Dispositif de portionnement selon la revendication 6 ou 7, **caractérisé en ce que** les surfaces internes (123) des corps de ladite mâchoire (12a, 12b) dans la position fermée sont agencées pour former un angle (β), qui est inférieur à 180°, de préférence dans la plage de 70° à 110°.

9. Dispositif de portionnement selon la revendication 6, 7 ou 8, **caractérisé en ce que** les coupe-arête (8) comprennent une partie interne 80 qui est attachée de manière fixe au corps de la mâchoire (12a, 12b) ou intégrée à celui-ci.

10. Procédé d'emballage de produits alimentaires (3) comprenant :
i. l'acheminement du produit alimentaire (3) vers un robot et la saisie du produit alimentaire (3) par un dispositif de saisie de robot (1) comportant deux éléments de saisie (12a, 12b) agencés pour maintenir ledit produit alimentaire (3) dans une position de maintien ;
ii. le soulèvement dudit produit alimentaire (3) à déplacer vers un support de portion par ledit dispositif de saisie (1) ;
iii.le déplacement dudit produit alimentaire (3) vers le support de portion sélectionné et
iv. la libération dudit produit alimentaire (3) sur le support de portion, dans lequel en liaison avec l'étape « i » ou l'étape « ii », une pièce (3A) dudit produit alimentaire (3) est coupée par un dispositif de coupe (2) agencé au niveau d'une première et/ou d'une deuxième extrémité/s (120) desdits éléments de saisie (12a, 12b), dans lequel ledit dispositif de coupe (2) interagit avec au moins un coupe-arête (8) agencé le long d'au moins une partie desdites première et/ou deuxième extrémités (120), et dans lequel au niveau de chaque robot, en lien avec un produit alimentaire (3) arrivant, la détermination d'un poids de taille réduite optimal du produit alimentaire (3) pour un support de portion choisi, le calcul de la position de la coupe de réduction de taille de l'objet pour obtenir ledit poids de taille réduite et la commande du robot en saisissant le produit alimentaire (3) à une position basée sur une mesure de longueur qui fournit un poids calculé avec précision du produit coupé qui atteindra ladite coupe de réduction de taille déterminée dudit produit alimentaire (3), afin de mieux satisfaire un poids cible dudit support de portion.

11. Procédé selon la revendication 10, **caractérisé par** la fourniture d'au moins l'un desdits éléments de saisie (12a, 12b) sous la forme d'une/de mâchoire/s (12a, 12b) agencée/s de manière articulée.

12. Procédé selon la revendication *11,* **caractérisé par** l'agencement desdits éléments de saisie (12a, 12b) avec des première et deuxième mâchoires (12a, 12b) agencées de manière articulée.

13. Procédé selon l'une quelconque des revendications 10 à 12, **caractérisé par** le fait de munir ledit dispositif de coupe (2) d'au moins une lame de couteau (22).

14. Procédé selon l'une quelconque des revendications 10 à 13, **caractérisé par** l'agencement des surfaces internes (123) des corps de ladite mâchoire (12a, 12b) dans la position fermée pour former un angle (β), qui est inférieur à 180°.

15. Procédé selon la revendication 14, **caractérisé en ce que** ledit angle (β) est dans la plage de 70° à 110°.
